# FASCICULE DE BREVET EUROPEEN

(11) **EP 2 232 681 B1**
(45) Date de publication et mention de la délivrance du brevet: **08.08.2012**
(21) Numéro de dépôt: 08868763.7
(22) Date de dépôt: 19.12.2008
(51) Int. Cl.: H02M 1/12, H02M 1/42, H03H 1/00

(54) **CIRCUIT CORRECTEUR DU FACTEUR DE PUISSANCE POUR UNE ALIMENTATION TRIPHASEE**
LEISTUNSFAKTORKORREKTURSCHALTUNG UND DREHSTROMNETZTEIL
POWER FACTOR CORRECTION CIRCUIT FOR THREE-PHASE POWER SUPPLY

(30) Priorité: 21.12.2007 FR 0709029
(43) Date de publication de la demande: 29.09.2010
(73) Titulaire: THALES, 92200 Neuilly-sur-Seine (FR)
(72) Inventeur: RINCENT, Michel, F-92000 Issy Les Moulineaux (FR); ESPOSITO, Pierre, F-94160 Saint-Mande (FR); RICHARDEAU, Charles, F-85290 Mortagne-sur-Sevre (FR)
(74) Mandataire: Labatte, Laurent
(86) Numéro de dépôt international: PCT/EP2008/068066
(87) Numéro de publication internationale: WO 2009/083504

(56) Documents cités:
- WO-A-96/24983
- US-A- 5 195 232
- US-A- 5 969 583
- US-A1- 2006 250 207
- JANG Y ET AL: "A novel, robust, harmonic injection method for single-switch, three-phase, discontinuous-conduction-mode boost rectifiers" 19970622; 19970622 - 19970627, vol. 1, 22 juin 1997 (1997-06-22), pages 469-475, XP010241587
- KOLAR J W ET AL: "ACOMPREHENSIVE DESIGN APPROACH FOR A THREE-PHASE HIGH-FREQUENCY SINGLE-SWTICH DISCONTINUOUS-MODE BOOST POWER FACTOR CORRECTOR BASEDON ANALYTICALLY DERIVED NORMALIZED CONVERTER COMPONENT RATINGS" CONFERENCE RECORD OF THE INDUSTRY APPLICATIONS CONFERENCE IAS ANNUAL MEETING. TORONTO, OCT. 3 - 8, 1993; [CONFERENCE RECORD OF THE INDUSTRY APPLICATIONS CONFERENCE IAS ANNUAL MEETING], NEW YORK, IEEE, US, vol. PART 02, 3 octobre 1993 (1993-10-03), pages 931-938, XP000419555

## Description

La présente invention concerne un circuit correcteur du facteur de puissance pour une alimentation triphasée. L'invention s'applique notamment au domaine de l'électronique de puissance, en particulier à la réalisation de blocs d'alimentation triphasée.

Un circuit électronique de puissance introduit parfois une puissance réactive entraînant un déphasage du courant et de la tension d'alimentation. De plus, un ou plusieurs étages de conversion présents dans ledit circuit électronique, par exemple un étage de redressement de la tension, provoquent des déformations du courant d'entrée, dégradant par conséquent le facteur de puissance. Le circuit électronique de puissance nécessite donc, au niveau de son entrée, l'adjonction d'un circuit correcteur en vue d'augmenter le facteur de puissance.

D'une part, le circuit correcteur, désigné par l'acronyme PFC par la suite, en référence à l'expression anglo-saxonne « Power Factor Correction » signifiant « correction du facteur de puissance », doit remettre en phase le courant et la tension. D'autre part, le circuit PFC doit limiter les distorsions harmoniques du courant d'entrée. Ainsi, un circuit PFC doit au moins satisfaire deux contraintes simultanément : obtenir un facteur de puissance élevé et une bonne tenue de la distorsion harmonique en courant induite. Or, les nouvelles normes, notamment en matière de pureté dans la forme du courant sont de plus en plus sévères, comme en témoigne, par exemple, les chapitres relatifs aux émissions conduites de la norme MIL-STD-461 E du département de la défense américain.

Pour satisfaire les contraintes sévères précitées avec des applications alimentées par un courant triphasé, il est naturel de juxtaposer trois étages PFC, un pour chaque phase du courant électrique. Toutefois, bien que cette solution permette d'atteindre de bonnes performances, tant en niveau de distorsion harmonique, qu'en facteur de puissance, elle aboutit à une architecture complexe, notamment à cause des difficultés d'équilibrage entre les trois étages PFC. De plus, le circuit résultant s'avère volumineux du fait de la démultiplication des composants à employer.

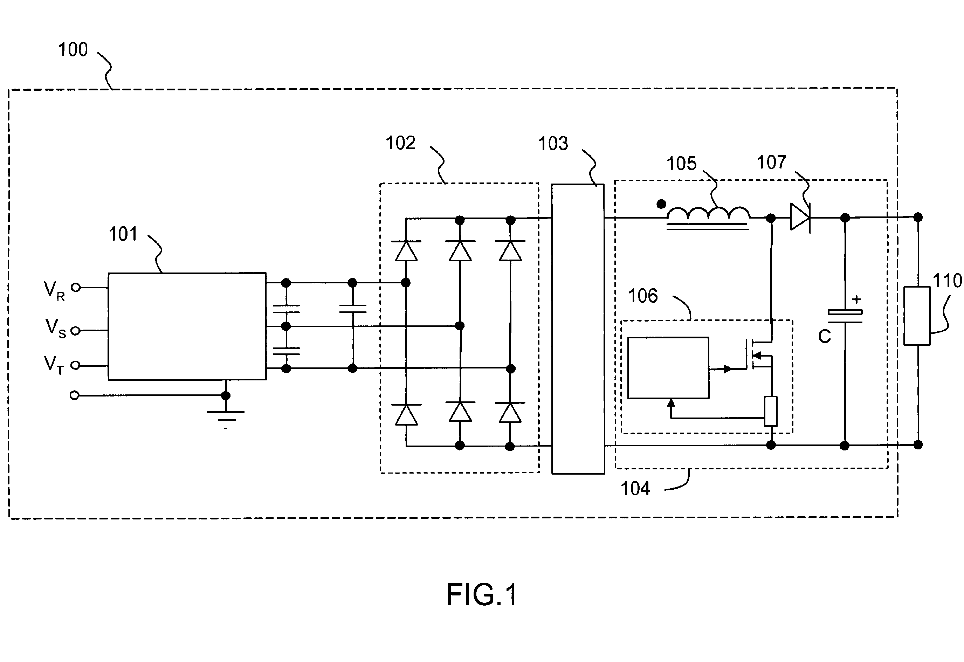

Une solution alternative reprenant le principe des circuits PFC de type « boost » est présentée en figure 1. Il s'agit d'un circuit correcteur classique 100 pour une alimentation triphasée comportant un premier bloc de filtrage 101 dédié aux basses fréquences, un pont de redressement hexaphasé 102, un deuxième bloc de filtrage 103 dédié aux hautes fréquences, et un étage élévateur de tension 104, lequel comprend une inductance 105, un interrupteur commandé 106, et une diode de roue libre 107 alimentant une capacité réservoir C. La valeur de l'inductance 105 est choisie suffisamment grande pour que le circuit 100 fonctionne en mode continu. La capacité C est une réserve d'énergie permettant d'alimenter un circuit utilisateur, modélisé sur la figure 1 par une charge 110. Ce circuit correcteur classique 100 permet, sans recourir à trois étages PFC, d'augmenter significativement le facteur de puissance du circuit. Cependant, la valeur de l'inductance 105 devant être élevée pour obtenir un lissage acceptable du courant, le composant inductif choisi pour remplir ce rôle s'avère souvent très volumineux. De plus, en pratique, l'architecture de ce circuit montre ses limites en tenue des distorsions harmoniques ; elle ne permet pas de répondre aux exigences des normes les plus sévères.

D'autres solutions ont été proposées, notamment un circuit présenté dans le brevet référencé US6984964 du demandeur Delta Electronics Inc.. Ce circuit, conçu pour une alimentation triphasée, permet d'obtenir de faibles niveaux de distorsion harmonique, tout en conservant un facteur de puissance élevé. Cependant, ce circuit est particulièrement coûteux, car il requiert l'utilisation d'un processeur de signal numérique ou DSP (« Digital Signal Processor »), et d'un circuit complexe programmable ou CPLD (« Complex Programmable Logic Device »), de manière à contrôler les retours de courant vers l'entrée du circuit notamment quand le neutre du réseau triphasé n'est pas connecté au circuit. En outre, il est nécessaire d'avoir 3 fonctions PFC distinctes, une par phase pour réaliser la fonction « PFC » permettant d'obtenir tout à la fois un facteur de puissance proche de l'unité conjugué à une faible distorsion harmonique en courant d'entrée, par exemple pour tenir l'exigence de l'essai CE101 de la norme MIL-STD-461 E.

Un circuit est proposé par Yang et al, « A novel, robust harmonic injection method for single-switch, three phase, discontinuous-conduction-mode boost rectifiers » 19970622-19970627, vol. 1, 22 juin 1997, pages 469-475, mais il ne permet pas de tenir de fortes exigences en matière de distorsion harmonique.

Un but de l'invention est de proposer un circuit PFC permettant de respecter des exigences sévères relatives au facteur de puissance et à des niveaux de distorsions harmoniques, tout en limitant la taille dudit circuit PFC et son coût. A cet effet, l'invention a pour objet un circuit correcteur du facteur de puissance d'un circuit pour réseau électrique triphasé comportant un bloc de filtrage en entrée recevant les trois phases du courant, au moins une inductance par phase placée en aval du bloc de filtrage, un pont de redressement alimentant un étage de découpage du courant, le bloc de filtrage comportant une cellule de filtrage de mode différentiel comprenant au moins un circuit inductif formé d'un unique matériau magnétique en double E, chaque jambe du E étant entouré d'un bobinage, les valeurs des inductances étant choisies, de sorte que ledit circuit correcteur fonctionne à la frontière entre le mode continu et le mode discontinu, le bloc de filtrage comportant une première cellule de filtrage de mode commun, associée en série avec la première cellule de filtrage de mode différentiel et une seconde cellule de filtrage de mode différentiel, le circuit correcteur étant caractérisé en ce que le bloc de filtrage comporte également une seconde cellule de filtrage de mode commun comportant une sortie point milieu et intercalée entre la première cellule de filtrage de mode différentiel et la deuxième cellule de filtrage de mode différentiel.

Selon un mode de réalisation, le bloc de filtrage comporte une première cellule de filtrage de mode commun, associée en série avec une première cellule de filtrage de mode différentiel et une seconde cellule de filtrage de mode différentiel, le bloc de filtrage comportant également une seconde cellule de filtrage de mode commun comportant une sortie point milieu et intercalée entre la première cellule de filtrage de mode différentiel et la deuxième cellule de filtrage de mode différentiel.

Selon un mode de réalisation, la seconde cellule de filtrage de mode différentiel comporte des inductances simples et l'ensemble des inductances de mode différentiel est intégré dans un bloc de résine moulé, ledit ensemble étant composé des modules inductifs et des inductances simples de la première cellule de filtrage de mode différentiel ainsi que des inductances simples de la seconde cellule de filtrage de mode différentiel.

L'invention a également pour objet un bloc d'alimentation comportant un circuit correcteur du facteur de puissance tel que décrit plus haut.

Contrairement aux circuits PFC de l'art antérieur, le circuit selon l'invention est unitaire, c'est à dire qu'il comprend un seul circuit PFC fonctionnant en mode triphasé. Cette caractéristique comporte plusieurs avantages. D'une part, elle permet de réduire la taille globale du circuit d'un facteur trois. D'autre part, elle permet de résoudre les problèmes d'équilibrage des phases, que le neutre du réseau triphasé soit connecté au circuit ou non. En outre, une architecture additionnelle requérant des modules de calcul tels qu'un DSP ou un CPLD n'est plus nécessaire .

D'autres caractéristiques apparaîtront à la lecture de la description détaillée donnée à titre d'exemple et non limitative qui suit faite en regard de dessins annexés qui représentent :
- la figure 1, une architecture de circuit correcteur selon l'art antérieur, la figure a déjà été présentée,
- la figure 2, l'architecture d'un mode de réalisation d'un circuit correcteur optimisé selon l'invention,
- la figure 3a, l'illustration de la première phase du cycle de découpage du courant opéré par un circuit correcteur selon l'invention,
- la figure 3b, l'illustration de la seconde phase du cycle de découpage du courant opéré par un circuit correcteur selon l'invention,
- la figure 4a, la forme du courant I_{LS} traversant une inductance du circuit correcteur selon l'invention, et une illustration de la forme du courant de phase I_{PH} obtenue avec ledit circuit, après une optimisation de la valeur d'inductance,
- la figure 4b, une vue rapprochée du courant I_{Ls} d'inductance présenté en figure 4a,
- la figure 4c, une illustration de la forme du courant de phase I_{PH} obtenue avec un circuit correcteur selon l'invention,
- la figure 5, un schéma de principe d'un bloc de filtrage compris par un circuit correcteur selon l'invention,
- la figure 6a, une vue de dessus d'un bloc de filtrage compris par un circuit correcteur selon l'invention,
- la figure 6b, deux coupes, en vue de côté, d'un bloc de filtrage compris par un circuit correcteur selon l'invention,
- la figure 7a, une vue de dessus d'un module inductif présent dans le module de filtrage d'un circuit correcteur selon l'invention,
- la figure 7b, une vue de côté d'un module inductif présent dans le module de filtrage d'un circuit correcteur selon l'invention.

Par souci de clarté de la description, les mêmes références dans des figures différentes désignent les mêmes éléments.

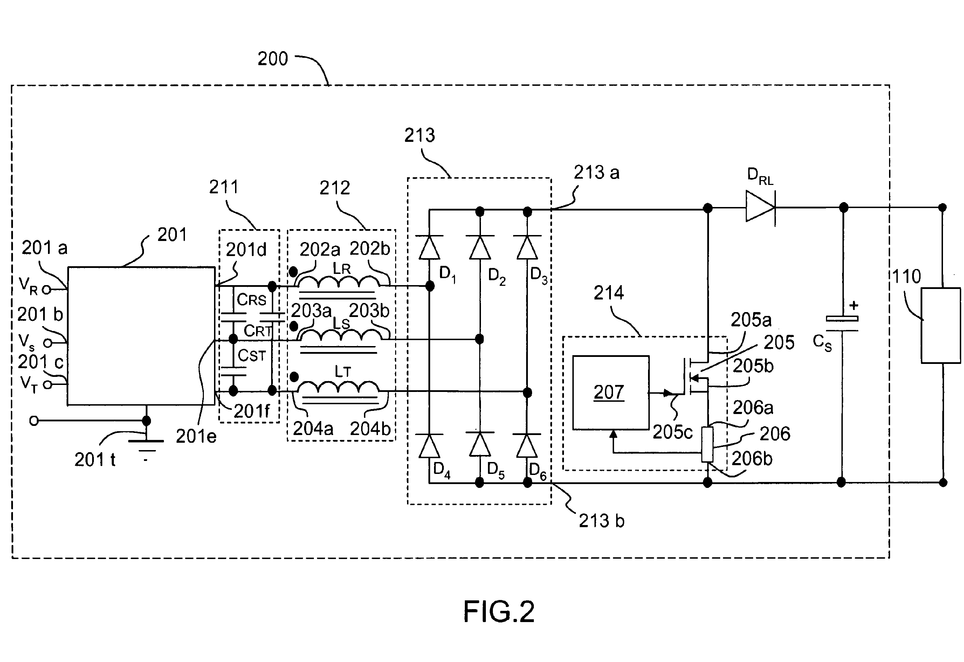

La figure 2 présente l'architecture d'un mode de réalisation du circuit correcteur selon l'invention.

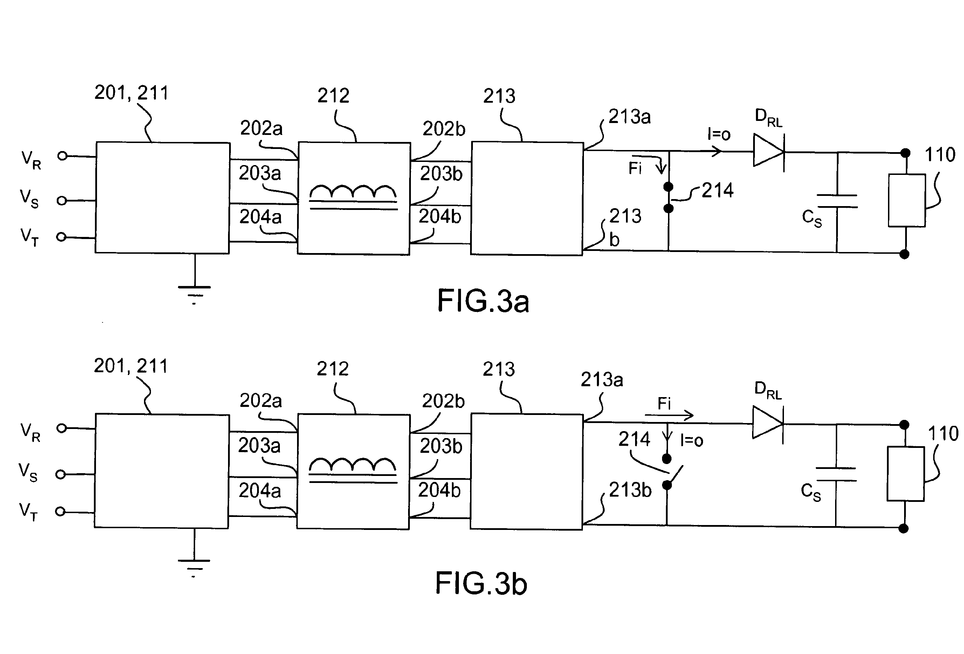

Le circuit correcteur 200 de la figure 2 comporte un bloc de filtrage 201 comprenant trois entrées 201 a, 201 b, 201 c et trois sorties 201d, 201e, 201f. Le bloc de filtrage 201 est alimenté par trois phases de courant, une première phase V_{R} sur la première entrée 201a, une deuxième phase V_{S} sur la deuxième entrée 201b, et une troisième phase V_{T} sur la troisième entrée 201c. En outre, le bloc de filtrage 201 est relié à la terre 201t. Ce bloc de filtrage 201 sera détaillé plus loin, en figures 3, 5, 6a et 6b.

Un étage de filtrage 211, permettant de rejeter composantes de hautes fréquences générées par le découpage du courant effectué par l'étage PFC 214 décrit plus loin, est placé en série à la sortie du bloc de filtrage 201. Plus précisément, dans l'exemple de la figure 2, la première sortie 201d du bloc de filtrage 201 est reliée avec sa deuxième sortie 201e par l'intermédiaire d'une première capacité C_{RS}, sa deuxième sortie 201 e est reliée à sa troisième sortie 201f par l'intermédiaire d'une deuxième capacité C_{ST}, et sa troisième sortie 201f est reliée à sa première sortie 201d par l'intermédiaire d'une troisième capacité C_{RT}. Selon un autre mode de réalisation, l'étage de filtrage 211 des hautes fréquences est intégré au bloc de filtrage 201.

Un étage inductif 212 est placé en sortie de l'étage de filtrage 211 des signaux de haute fréquence. Plus précisément, dans l'exemple de la figure 2, la première sortie 201e du bloc de filtrage 201 est reliée à la première borne 202a d'une première inductance L_{R} ; la deuxième sortie 201e du bloc de filtrage 201 est reliée à la première borne 203a d'une deuxième inductance L_{S} ; la troisième sortie 201f du bloc de filtrage 201 est reliée à la première borne 204a d'une troisième inductance L_{T}.

Les inductances L_{R}, L_{S} et L_{T} sont reliées à un pont de diodes 213 de redressement de la tension. Plus précisément, dans l'exemple de la figure 2, la deuxième borne 202b de la première inductance L_{R} est reliée à l'anode d'une première diode D₁ ; la deuxième borne 203b de la deuxième inductance L_{S} est reliée à l'anode d'une deuxième diode D₂ ; la deuxième borne 204b de la troisième inductance L_{T} est reliée à l'anode d'une troisième diode D₃. De plus, l'anode de la première diode est reliée à la cathode d'une quatrième diode D₄ ; l'anode de la deuxième diode D₂ est reliée à la cathode d'une cinquième diode D₅ ; l'anode de la troisième diode est reliée à la cathode d'une sixième diode D₆. Le pont de diodes 213 comprend deux sorties 213a, 213b. Les cathodes de la première diode C₁, de la deuxième diode D₂ et de la troisième diode D₃ sont reliée entre-elles au niveau de la première sortie 213a du pont de diode 213. Les anodes de la quatrième diode D₄, de la cinquième diode D₅ et de la sixième diode D₆ sont reliées entre-elles au niveau de la deuxième sortie 213b du pont de diodes 213.

La première sortie 213a du pont de diodes 213 est reliée à la deuxième sortie 213b par l'intermédiaire d'un interrupteur commandé 214. Dans l'exemple, l'interrupteur commandé 214 est formé par un transistor MOSFET 205 (« Metal Oxide Semiconductor Field Effect Transistor ») dont le drain 205a est relié à la première sortie 213a du pont de diodes 213, dont la source 205b est reliée à la première borne 206a d'une résistance 206 de shunt, et dont la grille 205c est commandée par un générateur 207 de signal de découpage. Dans l'exemple, ce générateur 207 est à modulation de largeur d'impulsions, un signal à l'état bas entraînant un blocage du MOSFET 205, un signal à l'état haut commandant le passage du courant à travers le MOSFET 205. La fréquence d'émission desdites impulsions est très largement supérieure à la fréquence du courant issu de chacune des phases d'entrée V_{R}, V_{S} et V_{T}. Par exemple, la fréquence d'émission des impulsions est de l'ordre de 125kHz pour un courant de réseau à 400Hz. La seconde borne 206b de la résistance de shunt 206 est reliée à la deuxième sortie 213b du pont de diodes 213. Cette résistance 206 de valeur très faible permet de mesurer le courant issu de la source 205b du MOSFET 205 afin d'adapter la largeur des impulsions émises par le générateur 207.

Par ailleurs, une diode de roue libre D_{RL} est placée de telle sorte que son anode soit connectée à la première sortie 213a du pont de diodes 213 et au drain 205a du transistor 205.

Enfin, une capacité réservoir Cs est placée en queue de circuit pour stocker l'énergie nécessaire au circuit utilisateur 110 à alimenter, y compris en cas de coupure transitoire du réseau alternatif d'entrée ; la première borne de cette capacité Cs étant reliée à la cathode de la diode de roue libre D_{RL}, la seconde borne de cette capacité étant reliée à la seconde sortie 213b du pont de diodes 213.

Le circuit correcteur de la figure 2 fonctionne selon un cycle en deux phases : une première phase durant laquelle l'interrupteur commandé 214 est fermé, et une seconde phase durant laquelle l'interrupteur commandé 214 est ouvert.

La première phase est illustrée en figure 3a. L'interrupteur commandé 214 étant fermé, un court-circuit est formé au niveau de la branche comprise entre la première sortie 213a du pont de diodes 213 et sa deuxième sortie 213b. Le courant, représenté sur la figure 3a par une flèche Fi, passe donc par cette branche 213a, 213b en court-circuit et permet aux inductances L_{R}, L_{S}, L_{T} de stocker de l'énergie magnétique. Parallèlement, la diode de roue libre D_{RL} se bloque et le courant passant par ladite diode D_{RL} est nul.

Cette énergie magnétique stockée par les inductances L_{R}, L_{S} et L_{T} est restituée à la capacité Cs lors de la deuxième phase du cycle, comme illustré en figure 3b. Le courant, représenté sur la figure par une flèche Fi, est transmis intégralement vers la diode de roue libre D_{RL}.

Les valeurs des inductances L_{R}, L_{S} et L_{T} sont optimisées pour limiter le besoin de filtrage des signaux de basses fréquences effectué par le bloc de filtrage 201, sans dégrader la distorsion harmonique en courant d'entrée.

Les valeurs des inductances L_{R}, L_{S}, L_{T} sont choisies, de préférence, de sorte que le circuit correcteur 200 fonctionne à la frontière entre le mode continu et le mode discontinu, autrement dit, les inductances L_{R}, L_{S}, L_{T} finissent de se décharger au moment d'entamer la première phase du cycle. Plus la valeur de chacune des inductances L_{R}, L_{S}, L_{T} est faible, plus l'ondulation du courant de hautes fréquences, issue du découpage effectué par l'interrupteur commandé 214, devra être atténuée pour tenir les exigences en émissions conduites de hautes fréquences, et donc plus l'atténuation du filtrage effectué par le bloc de filtrage 201 doit être importante pour limiter les distorsions harmoniques du courant d'entrée.

A contrario, plus la valeur des inductances L_{R}, L_{S} et L_{T} est élevée, plus le risque de dégrader la distorsion harmonique basse fréquence (c'est à dire la fréquence du réseau et ses harmoniques proches) est élevée. Des valeurs trop élevées pour les inductances L_{R}, L_{S} et L_{T} entraîneraient une dégradation du signal enveloppe du courant d'entrée. Il faudrait alors, pour préserver la forme de ce signal enveloppe, augmenter significativement le volume du filtrage de basses fréquences.

Aussi, la valeur optimisée des inductances L_{R}, L_{S} et L_{T} est choisie pour concilier les deux contraintes suivantes : obtenir une faible distorsion en courant de ligne aux fréquences proches de la fréquence du réseau et satisfaire aux exigences en hautes fréquences vis à vis de la pollution engendrée par le découpage.

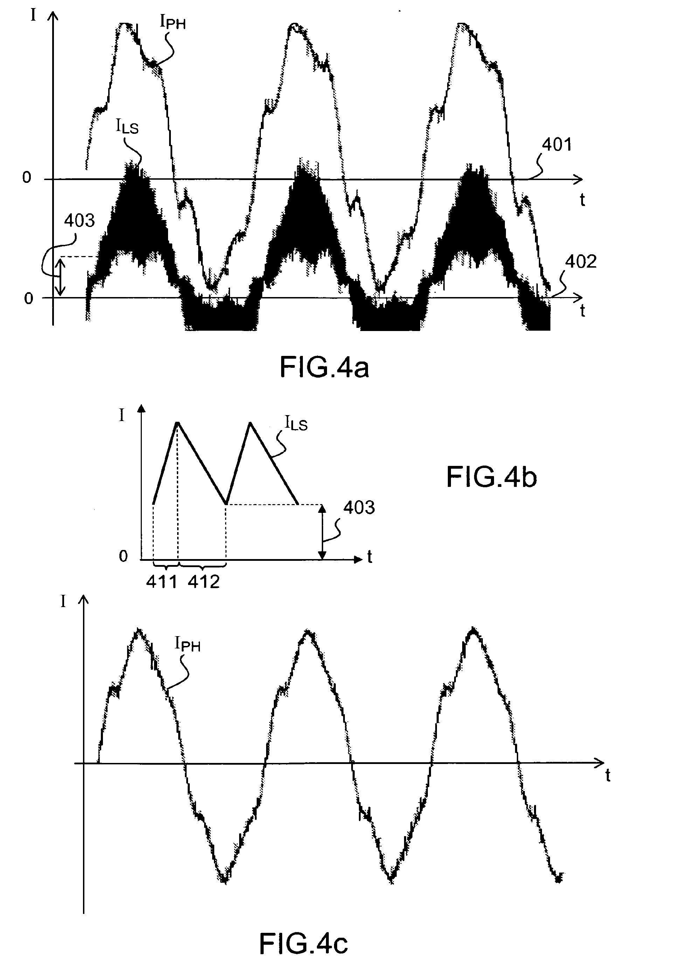

La figure 4a illustre, dans le temps t, la forme du courant de phase I_{PH} de la deuxième phase du réseau et la forme du courant I_{LS} traversant la deuxième inductance L_{S}, la forme du courant traversant les autres inductances L_{R} et L_{T} étant similaire. Le courant I_{PH} est représenté par rapport à un premier axe 401, tandis que le courant d'inductance Il est représenté par rapport à un deuxième axe 402. Lorsque la sinusoïde de courant est proche du maximum, un palier 403, formant une composante continue du courant I_{LS}, apparaît. La forme obtenue du courant d'inductance I_{LS}, en particulier le palier 403 ainsi que la phase par rapport au courant I_{PH} est due à l'optimisation susmentionnée de la valeur des inductances L_{R}, I_{S}, L_{T}. Avec cette optimisation, le courant I_{PH} est marqué par une distorsion harmonique égale à 15% environ, soit une amélioration significative par rapport à un circuit de l'art antérieur (de 40% à 25% de distorsion, selon la puissance à délivrer), comme illustré en figure 4a La figure 4b est une vue rapprochée de la forme du courant I_{LS} d'inductance L_{S} préalablement présenté en figure 4a. Le courant augmente linéairement pendant la première phase 411 du cycle de découpage. Puis, pendant la seconde phase 412, l'inductance se décharge et le courant diminue jusqu'à s'annuler, le courant augmentant de nouveau après l'écoulement de la période T du cycle. Le courant dans chaque inductance L_{R}, L_{S}, L_{T} prend donc la forme d'une succession de triangles.

Comme indiqué par la suite, la distorsion du courant est davantage diminuée par des améliorations apportées au bloc de filtrage 201 placé à l'entrée du circuit correcteur selon l'invention. La forme du courant bénéficiant de ces améliorations est présentée en figure 4c.

Le courant I_{LS} reste inchangé (par rapport au relevé, figure 4a) mais la forme du courant de ligne est à nouveau optimisée de sorte que la distorsion harmonique résultante est de l'ordre de 5%, soit de nature à satisfaire aux exigences les plus sévères, notamment celles définies par l'essai noté CE101 de la norme MIL-STD-461 E du département de la défense américain.

En regard de l'architecture présentée en figure 1, l'architecture de la figure 2 comporte l'avantage de mieux éliminer les raies d'harmoniques indésirables en basses fréquences, particulièrement celles du cinquième harmonique et du septième harmonique. En contrepartie, le courant étant modulé à un taux élevé (par exemple, 70% à 100%) à la fréquence de découpage, les raies des harmoniques de rangs élevés sont plus importantes que pour un circuit correcteur fonctionnant en mode continu. Ainsi, par rapport au circuit présenté en figure 1, le filtrage en basses fréquences peut être allégé, tandis que le filtrage en hautes fréquences doit être amélioré. Néanmoins, effectuer un filtrage en hautes fréquences est beaucoup moins pénalisant en termes d'occupation de l'espace qu'un filtrage en basses fréquences, lequel requiert des composants volumineux.

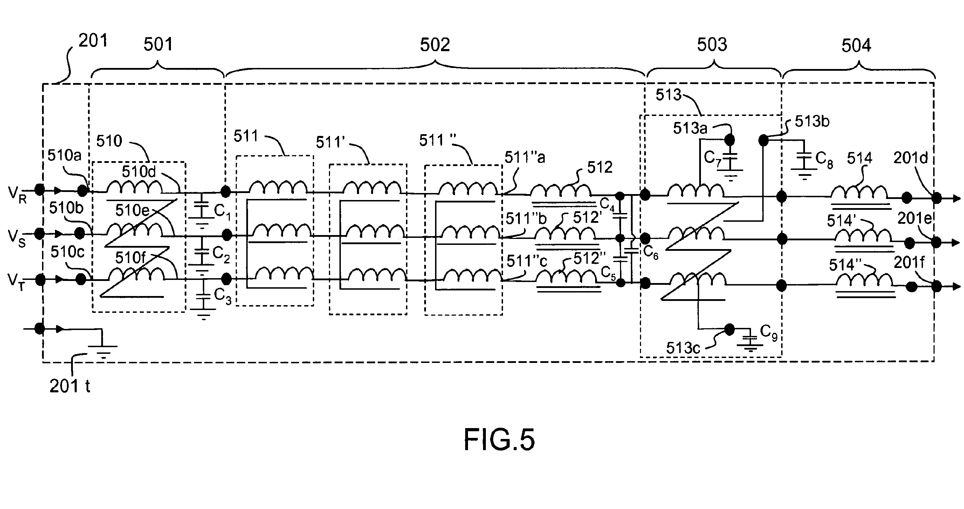

La figure 5 présente un synoptique d'un bloc de filtrage 201 placé en entrée du circuit correcteur du mode de réalisation de la figure 2. Le bloc de filtrage 201 comporte une première cellule de filtrage de mode commun 501, laquelle est associée en série avec une première cellule de filtrage de mode différentiel 502, laquelle est associée en série avec une deuxième cellule de filtrage de mode commun 503, laquelle est associée en série avec une deuxième cellule de filtrage de mode différentiel 504.

La première cellule de filtrage de mode commun 501 comporte un module de filtrage classique 510 placé en tête du bloc de filtrage 201, au plus près des connexions d'entrées 201a, 201b, 201c. Ce module 510 comporte trois entrées 510a, 510b, 510c et trois sorties 510d, 510e, 510f, la première entrée 510a dudit module 510 étant reliée à la première entrée 201a du bloc de filtrage 201, la deuxième entrée 510b dudit module 510 étant reliée à la deuxième entrée 201b du bloc de filtrage 201, la troisième entrée 510c dudit module 510 étant reliée à la troisième entrée 201c du bloc de filtrage 201. Chacune des sortie, respectivement 510d, 510e, 510f, du module de fltrage 510 est raccordée à la terre via une capacité, respectivement C₁, C₂, C₃.

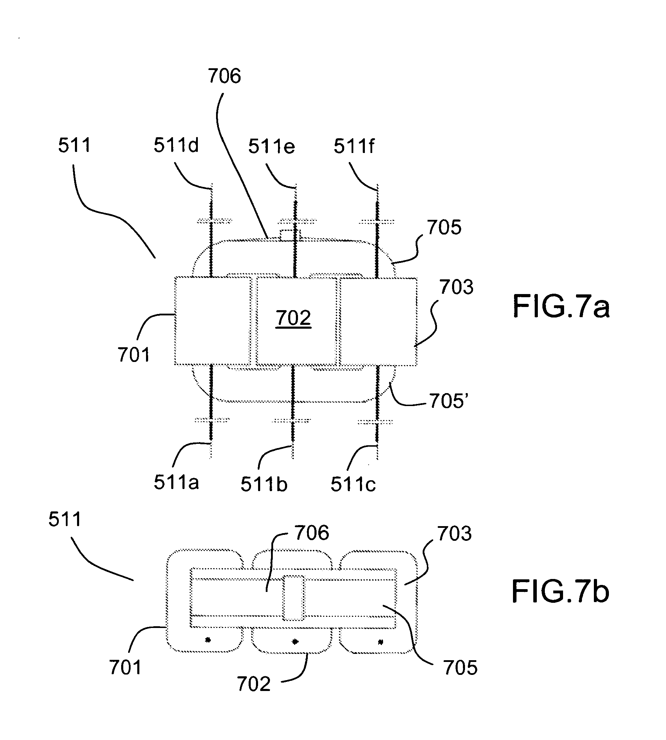

La première cellule de filtrage de mode différentiel 502, permet de filtrer les composantes de basses fréquences du courant, c'est à dire dans une bande fréquentielle s'étendant sensiblement de 30Hz à 15kHz. Cette cellule 502 comporte une structure originale permettant de réduire son volume par rapport à une cellule de filtrage classique. En effet, ladite cellule 502 comprend un ou plusieurs modules inductifs triphasés 511, 511', 511", dans l'exemple, trois, associés en série pour obtenir une valeur d'inductance suffisamment élevée. Lesdits modules inductifs 511, 511', 511" comprennent trois entrées 511 a, 511b, 511c et trois sorties 511 d, 511 e, 511f chacune des entrées correspondant à une phase de courant d'un réseau triphasé, chacune des sorties également. Les modules inductifs 511, 511', 511" sont détaillés en figure 7. Par ailleurs, la première cellule de filtrage de mode différentiel 502 comporte également, pour chaque phase de courant, une inductance simple 512, 512', 512", chacune de ces inductances étant associée en série avec le ou les modules inductifs triphasés 511, 511', 511". Dans l'exemple, une première inductance 512 est reliée à la première sortie 511a" du troisième module inductif 511", la deuxième inductance 512' est reliée à la deuxième sortie 511b" du troisième module inductif 511" et la troisième inductance 512" est reliée à la troisième sortie 511c" du troisième module inductif 511". L'association d'inductances simples 512, 512', 512" avec les modules inductifs triphasés 511, 511', 511" permet de compléter efficacement le filtrage opéré par lesdits modules 511, 511', 511", notamment pour les fréquences les plus élevées du gabarit de basses fréquences, dans l'exemple, dans l'intervalle de 10 à 15 kHz. En effet, la valeur des modules inductifs 511, 511', 511" commencent à baisser vers 10KHz. Un complément au filtrage en basses fréquences est donc réalisé par la mise en série des inductances simples 512, 512', 512" précitées. Ces inductances simples 512, 512', 512" sont réalisées avec des bobinages de même nature que les bobinages 514, 514', 514" dédiés au filtrage des composantes de hautes fréquences de la deuxième cellule de filtrage de mode différentiel 504, la valeur d'inductance de ces bobinages commençant à diminuer pour des fréquences bien plus élevées.

Ainsi, les inductances simples 512, 512', 512" prennent le relais des modules inductifs 511, 511', 511" pour les fréquences les plus élevées du gabarit de basses fréquences concerné par les exigences des normes relatives aux émissions conduites, notamment l'essai CE101 de la norme MIL-STD-461E.

Par ailleurs, des capacités C₄, C₅, C₆, sont placées en sortie des inductances simples 512, 512', 512" telle sorte qu'une première capacité C₄ relie la sortie de la première inductance simple 512 avec la sortie de la deuxième inductance simple 512', qu'une deuxième capacité C₅ relie la sortie de la deuxième inductance simple 512' avec la sortie de la troisième inductance simple 512" et qu'une troisième capacité C₆ relie la sortie de la première inductance simple 512 avec la sortie de la troisième inductance simple 512". Ces capacités permettent de favoriser le rejet des composantes fréquentielles générées par le découpage du courant.

La deuxième cellule de filtrage de mode différentiel 504 permet d'éliminer les composantes fréquentielles parasites issues du découpage de courant tel qu'illustré en figures 3a, 3b, c'est à dire les composantes dont la fréquence est égale ou supérieure à la fréquence de découpage.

En outre, par rapport à un bloc de filtrage classique, le bloc de filtrage 201 utilisé dans le circuit correcteur selon l'invention comporte une deuxième cellule de filtrage de mode commun 503 intercalée entre la première 502 et la deuxième cellule 504 de filtrage de mode différentiel. Cette deuxième cellule de filtrage 503 agit comme un tampon d'isolation entre les deux cellules de filtrage de mode différentiel 502, 504. Des sorties point milieu 513a, 513b, 513c pour chacune des trois phases du courant sont réalisées. Ces sorties point milieu raccordent des capacités C₇, C₈, C₉ de mode commun de la deuxième cellule de filtrage de mode commun 503 à la terre.

Ces capacités C₇, C₈, C₉ sont nécessaires pour tenir les exigences des normes d'entrée de type mode commun mais elles ne doivent en aucun cas interférer avec le fonctionnement de l'étage de découpage 214 situé en aval du bloc de filtrage 201. Les sorties point milieu 513a, 513b, 513c de la deuxième cellule de filtrage de mode commun 503 sont donc ajoutées de sorte que la partie du bobinage située en aval des capacités C₁, C₂, C₃ fasse office d'inductance de choc de manière à empêcher les composantes de hautes fréquences du courant, composantes issues du découpage par l'interrupteur commandé 214, de se refermer via les capacités de mode commun C₁, C₂, C₃ de la deuxième cellule de filtrage de mode commun 503. En l'absence de cette cellule de filtrage 503, des boucles parasites de circulation de courant peuvent apparaître entre lesdites capacités et l'étage de découpage du courant 205, 206. Une prise de sortie à point milieu 513a, 513b, 513c est donc réalisée pour chaque bobinage de phase afin de permettre le câblage à la terre desdites capacités.

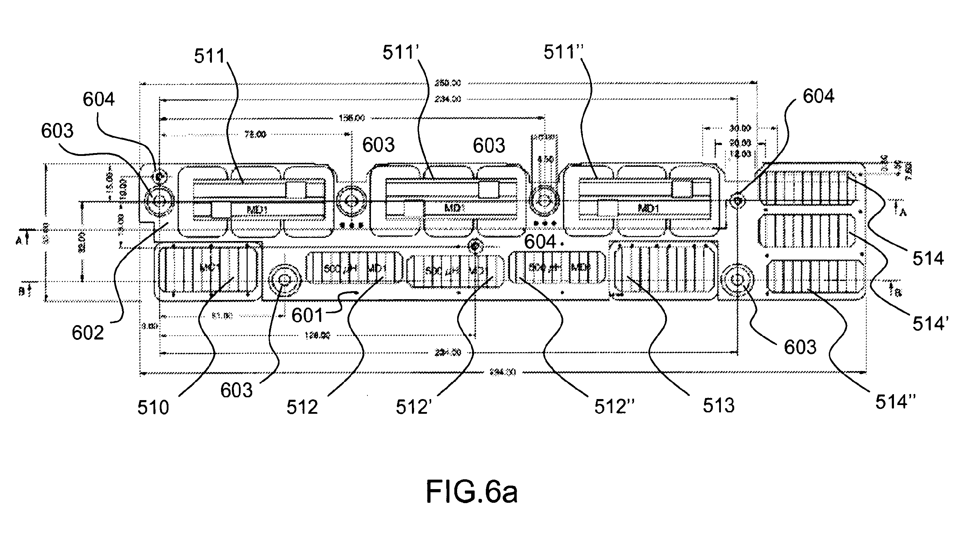

La figure 6a présente une vue de dessus d'un mode de réalisation d'un bloc de filtrage 201 placé en entrée d'un circuit correcteur selon l'invention. Les entrées et sorties des inductances512, 512', 512", 514, 514', 514" et des modules inductifs 511, 511', 511" sont représentées par des points 601, soit tous les bobinages de mode différentiel. Dans l'exemple, les cellules de filtrage de mode différentiel 502, 504 sont intégrées dans un bloc moulé 602. Des cotes mentionnant les dimensions en mm sont données sur la figure 6a à titre indicatif pour mieux percevoir la taille du bloc de filtrage 201.

Grâce, notamment, à la structure originale de la première cellule de filtrage de mode différentiel 502, la taille du bloc de filtrage 201 est modeste. A titre d'exemple, le bloc de filtrage 201, dimensionné pour un circuit utilisateur 110 (figure 2) requérant une puissance de 1KW, est dimensionné comme suit : une longueur inférieure à 300mm, une largeur égale à 55mm, et une hauteur égale à 48mm.

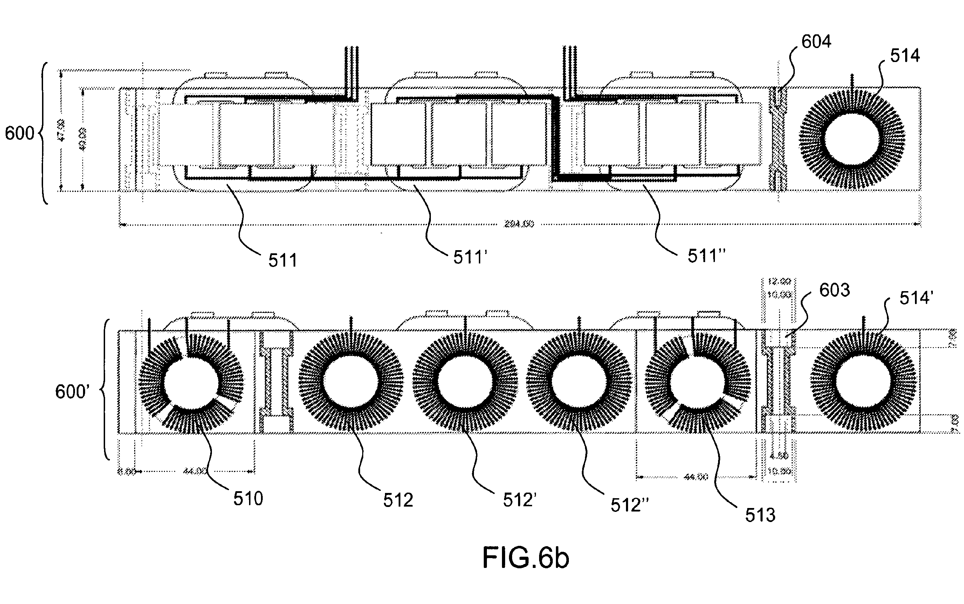

La figure 6b présente deux coupes 600, 600', du bloc de filtrage 201 vue de côté. Une première coupe 600 montre le bloc de filtrage 201 au niveau des modules inductifs 511, 511', 511" et une deuxième coupe montre le bloc de filtrage 201 au niveau des inductances de mode commun 510, 513.

Dans l'exemple des figures 6a et 6b, l'ensemble des inductances de mode différentiel est intégré dans le bloc de résine moulé 602, ces inductances étant les modules inductifs 511, 511', 511 ", les inductances simples 512, 512', 512" de la première cellule de filtrage de mode différentiel 502 ainsi que les inductances simples 514, 514', 514" de la seconde cellule de filtrage de mode différentiel 504.

Par contre, les inductances de mode commun 510, 513 étant formées à partir d'un matériau ferrite devant être protégé des contraintes mécaniques, ces deux inductances de mode commun 510 et 513 sont montées dans un second temps par collage au bloc de résine moulé 602. Ainsi, le bloc de filtrage 201 est formé par l'association du bloc moulé 602 avec les inductances de mode commun 510 et 513. Pour maintenir l'ensemble du bloc moulé 602 à la structure d'un châssis d'équipement, une première série de cinq entretoises 603 est façonnée.. Un circuit imprimé (non représenté sur les figures et sur lequel sont notamment implantées les capacités de mode commun et de mode différentiel) est raccordé électriquement au bloc moulé 602. Aussi, une seconde série de trois entretoises 604 permet la tenue mécanique dudit circuit imprimé au bloc moulé 602.

Dans le mode de réalisation présenté en figures 6a et 6b, l'ensemble du bloc de filtrage 201 est blindé par un boîtier, dans l'exemple en µ-métal,. L'ensemble ainsi blindé est propre à satisfaire aux exigences rayonnées en basses fréquences, notamment pour le champ magnétique H.

Les figures 7a et 7b détaillent la structure d'un module inductif 511 utilisé dans la première cellule de filtrage de mode différentiel 502, les autres modules inductifs 511', 511" étant analogues. La figure 7a présente une vue de dessus du module 511, tandis que la figure 7b présente une vue de côté du même module 511. Trois bobinages élémentaires sont enroulés autour d'un même noyau magnétique. Le module inductif 511 est une inductance triphasée : chacun des bobinages élémentaires est enroulé autour de chaque jambe d'un circuit en double E 705, 705', les deux circuits en forme de « E » étant assemblés de sorte que les jambes de chaque « E » soient placées l'une en face de l'autre pour former un semblant de « 8 ». Dans l'exemple, l'entrefer entre les deux circuits 705, 705' en forme de « E » est égal à 0,3 mm. Après montage du circuit magnétique, un ou plusieurs tours de ruban 706 est positionné autour des trois bobinages élémentaires.

A titre indicatif, dans l'exemple, chaque inductance formée par le bobinage élémentaire 701, 702, 703 vaut 1,35mH pour un courant de 3,5 ampères efficaces. Pour une même valeur d'inductance, le module inductif 511 forme donc un bobinage triphasé de taille plus petite que trois bobinages séparées.

La définition électrique (la nature triphasée du bobinage) du module inductif 511 dans le bloc de filtrage 201 permet de diminuer davantage la distorsion du courant d'entrée. L'intégration du module inductif 511 permet de passer de 15% de distorsion harmonique en courant, soit le courant de ligne I_{PH} obtenu grâce à l'optimisation de la valeur des inductances L_{R}, L_{S}, L_{T}, à une distorsion harmonique en courant comprise, dans l'exemple, entre 8% et 5%, comme illustré en figure 4c.

Un avantage du circuit PFC selon l'invention est qu'il ne comporte qu'une seule commande de découpage du courant, simplifiant ainsi son architecture et son fonctionnement. Par ailleurs, le circuit PFC selon l'invention est d'une taille modeste en comparaison des circuits PFC triphasés de l'art antérieur, ce qui, pour du matériel embarqué constitue un avantage parfois décisif.

A titre d'illustration, pour un réseau primaire produisant un courant triphasé de 115 VAC à 400 Hz, le circuit correcteur :
- permet, pour une puissance d'entrée de 700W, d'obtenir un facteur de puissance égal à 0.99, et une harmonique principale SHD (« Single Harmonic Distorsion ») inférieure à 9% pour les raies H5 du cinquième harmonique et H7 du septième harmonique (c'est à dire les raies respectivement H5 et H7 à 2000Hz et 2800Hz);
- permet, pour une puissance d'entrée de 1kW, d'obtenir un facteur de puissance égal à 0.95, une SHD égale à 6% pour la raie du cinquième harmonique et 2% pour la raie du septième harmonique, le taux de distorsion pour les autres raies étant inférieur à 2%.

Ces performances sont, notamment, compatibles de la tenue à l'essai CE101 de la norme MIL-STD-461E.

## Revendications

1. Circuit correcteur (200) du facteur de puissance d'un circuit pour réseau électrique triphasé comportant un bloc de filtrage (201, 211) en entrée dudit circuit correcteur recevant les trois phases du courant (V_{R}, V_{S}, V_{T}), au moins une inductance par phase de courant (L_{R}, L_{S}, L_{T}) placée en aval du bloc de filtrage, un pont de redressement (213) alimentant un étage de découpage du courant (214), le bloc de filtrage (201, 211) comportant au moins une cellule de filtrage de mode différentiel (502) comprenant au moins un circuit inductif (511) formé d'un unique matériau magnétique en double E (705, 705'), chaque jambe du E étant entouré d'un bobinage (701, 702, 703), les valeurs des inductances (L_{R}, L_{S}, L_{T}) étant choisies, de sorte que ledit circuit correcteur (200) fonctionne à la frontière entre le mode continu et le mode discontinu, le bloc de filtrage (201) comportant une première cellule de filtrage de mode commun (501), associée en série avec la première cellule de filtrage de mode différentiel (502) et une seconde cellule de filtrage de mode différentiel (504), le circuit correcteur étant **caractérisé en ce que** le bloc de filtrage (201) comporte également une seconde cellule de filtrage de mode commun (503) comportant une sortie point milieu et intercalée entre la première cellule de filtrage de mode différentiel (502) et la deuxième cellule de filtrage de mode différentiel (504).

2. Circuit correcteur selon la revendication 1, **caractérisé en ce que** la première cellule de filtrage de mode différentiel (502) comporte une inductance simple (512, 512', 512") par phase de courant, chacune de ces inductances simples étant associée en série avec une sortie du circuit inductif (511).

3. Circuit correcteur selon la revendication 1 ou 2, la seconde cellule de filtrage de mode différentiel (504) comportant des inductances simples (514, 514', 514"), **caractérisé en ce que** l'ensemble des inductances de mode différentiel est intégré dans un bloc de résine moulé (602), ledit ensemble étant composé des modules inductifs (511, 511', 511") et des inductances simples (512, 512', 512") de la première cellule de filtrage de mode différentiel (502) ainsi que des inductances simples (514, 514', 514") de la seconde cellule de filtrage de mode différentiel (504).

4. Circuit correcteur selon l'une des revendications précédentes, **caractérisé en ce que** les inductances de mode commun (510, 513) sont formées à partir d'un matériau ferrite.

5. Bloc d'alimentation comportant un circuit correcteur du facteur de puissance selon l'une des revendications précédentes.

## Claims

1. A power factor correction circuit (200) of a circuit for a three-phase electrical network, comprising a filtering block (201, 211) at the input of said correction circuit receiving the three phases of the current (V_{R}, V_{S}, V_{T}), at least one inductor per current phase (L_{R}, L_{S}, L_{T}) placed downstream of the filtering block, a rectifier bridge (213) supplying a current chopping stage (214), the filtering block (201, 211) comprising at least one differential mode filtering cell (502) that comprises at least one inductive circuit (511) that is formed from a single magnetic materiel in a double E (705, 705') shape, each leg of the E being surrounded by a coil (701, 702, 703), the values of the inductors (L_{R}, L_{S}, L_{T}) being selected so that said correction circuit (200) operates at the boundary between the continuous mode and the discontinuous mode, the filtering block (201) comprising a first common mode filtering cell (501) that is connected in series with the first differential mide filtering cell (502), and a second differential mode filtering cell (504), the correction circuit being **characterised in that** the filtering block (201) further comprises a second common mode filtering cell (503) that comprises a mid-point output and is interposed between the first differential mode filtering cell (502) and the second differential mode filtering cell (504).

2. The correction circuit according to claim 1, **characterised in that** the first differential mode filtering cell (502) comprises a simple inductor (512, 512', 512") per current phase, each of said simple inductors being in series with an output of the inductive circuit (511).

3. The correction circuit according to claim 1 or 2, the second differential mode filtering cell (504) comprising simple inductors (514, 514' 514"), **characterised in that** the set of inductors of the differential mode is integrated into a moulded resin (602), said assembly being composed of inductive modules (511, 511', 511") and simple inductors (512, 512', 512") of the first differential mode filtering cell (502), as well as simple (514, 514', 514") of the second differential mode filtering cell (504).

4. The correction circuit according to any one of the preceding claims, **characterised in that** the common mode inductors (510, 513) are formed from a ferrite material.

5. A supply block comprising a power factor correction circuit according to any one of the preceding claims.

## Patentansprüche

1. Leistungsfaktorkorrekturschaltung (200) einer Schaltung für ein Drehstromnetz, umfassend einen Filterblock (201, 211) am Eingang der Korrekturschaltung, der die drei Phasen des Stroms (V_{R}, V_{S}, V_{T}) empfängt, wenigstens einen unterhalb des Filterblocks vorgesehenen Induktor pro Stromphase (L_{R}, L_{S}, L_{T}), eine Gleichrichterbrücke (213), die eine Stromzerhackerstufe (214) versorgt, wobei der Filterblock (201, 211) wenigstens eine Differentialmoden-Filterzelle (502) umfasst, die wenigstens eine induktiv Schaltung (511) aufweist, die aus einem einzigen Doppel-E-förmigen Magnetmaterial (705, 505') gebildet ist, wobei jeder Schenkel des E von einer Spule (701, 702, 703) umgeben ist, wobei die Werte der Induktoren (L_{R}, L_{S}, L_{T}) so gewählt werden, dass die Korrekturschaltung (200) an der Grenze zwischen dem kontinuierlichen Modus und dem diskontinuierlichen Modus arbeitet, wobei der Filterblock (201) eine erste Gleichtakt-Filterzelle (501) umfässt, die in Serie mit der ersten Differentialmoden-Filterzelle (502) und einer zweiten Differentialmoden-Filterzelle (504) geschaltet ist, wobei die Korrekturschaltung **dadurch gekennzeichnet ist, dass** der Filterblock (201) auch eine zweite Gleichtakt-Filterzelle (503) mit einem Ausgang an einem mittleren Punkt zwischen der ersten Differentialmoden-Filterzelle (502) und der zweiten Differentialmoden-Filterzelle (504) umfasst.

2. Korrekturschaltung nach Anspruch 1, **dadurch gekennzeichnet, dass** die erste Diffrentialmoden-Filterschaltung (502) einen einfachen Induktor (512, 512', 512") pro Stromphase umfasst, wobei jeder dieser einfachen-Induktoren in Serie mit einem Ausgang der induktiven Schaltung (511) geschaltet ist.

3. Korrekturshaltung nach Anspruch 1 der 2, wobei die Differentialmoden-Filterzelle (504) einfache Induktoren (514, 514', 514") umfasst, **dadurch gekennzeichnet, dass** der Satz von Differentialmoden-Induktoren in einem geformten Harzblock (602) integriert ist, wobei der Satz aus induktiven Modulen (511, 511', 511") und aus einfachen Induktoren (512, 512', 512") der ersten Differentialmoden-Filterzelle (502) sowie aus einfachen Induktoren (514, 514', 514") der zweiten Difierentialmoden-Filterzelle (504) zusammengesetz ist.

4. Korrekturschaltung nach einem der vorherigen Ansprüche, **dadurch gekennzeichnet, dass** die Gleichtaktinduktoren (510, 513) aus einem Ferritmaterial gebildet sind.

5. Versorgungsblock, der eine Leistungsfaktorkorrekturschaltung nach einem der vorherigen Ansprüche umfasst.
